# EUROPEAN PATENT SPECIFICATION

(11) **EP 1 783 150 B1**
(45) Date of publication and mention of the grant of the patent: **02.09.2009**
(21) Application number: 06022043.1
(22) Date of filing: 20.10.2006
(51) Int. Cl.: C08G 18/10, C08G 18/48, C08G 18/50, C08G 18/66, C08K 3/40, C08K 7/02, C09D 175/02

(54) **Composite articles and a process for their production**
Verbundartikel und Verfahren zu ihrer Herstellung
Articles composite et procédé de préparation

(30) Priority: 02.11.2005 US 264890
(43) Date of publication of application: 09.05.2007
(73) Proprietor: Bayer MaterialScience LLC, Pittsburgh, PA 15205 (US)
(72) Inventor: Younes, Usama E., McMurray, PA 15317 (US); Kotar, James P., McMurray, PA 15317 (US); Lambach, James L., McMurray, PA 15317 (US); Perry, John H., Scenery Hill, PA 15360 (US)
(74) Representative: Perchenek, Nils

(56) References cited:
- EP-A- 0 590 803
- US-A1- 2004 023 050
- US-A1- 2004 135 280
- US-B2- 6 617 032

## Description

### BACKGROUND OF THE INVENTION

The present invention relates to fiber-reinforced composite articles which are sufficiently puncture resistant to pass the DynaTup Instrument Impact Test (described herein), are weather resistant and which have a smooth, bubble-free, defect-free surface and to a method for producing such composite articles. These composite articles are particularly useful for doors and panels.

Composite articles which are produced with fiber reinforced polymeric materials that are useful in construction applications such as doors, panels, and windows and for various components for automotive vehicles are known.

In U.S. Patent 6,197,242, for example, fiber reinforced molded articles are produced with two separate fiber surfacing veils with a fiber reinforcement sandwiched between those surfacing veils and a polyurethane reaction system is injected into the mold. It is the fiber surfacing veils to which the smooth finish is attributed. This process is disadvantageous in that it requires the use of two different forms of reinforcing material. Additionally, the use of a surfacing veil is labor intensive and time consuming, results in wasted material due to the need for trimming and requires the additional step of pre-forming the veil to fit complex shapes.

U.S. Patent 6,617,032 discloses composites made up of a polyurea show surface or top layer and a polyurethane backing layer. The top layer is the reaction product of an aliphatic, ultraviolet light stable polyisocyanate and a polyamine. The polyurethane backing layer is the reaction product of a polyisocyanate component and a polyol component. Neither of these disclosed layers is, however, reinforced with a material such as glass fibers. Consequently, these composites would not be suitable for use in applications such as doors.

U.S. Patent 6,696,160 discloses polyurethane composite components useful in exterior bodywork parts. These composites are composed of a layer of polyurethane reinforced with short fibers having a paintable surface and a second layer of polyurethane reinforced with long fibers. The use of two fiber-reinforced layers is said to produce composites which are hard enough to resist scratching and have high heat distortion resistance.

Published Application US 20020195742 teaches that the surface quality problem of "print-through" (i.e., rough or irregular surface due to the presence of reinforcing fiber at the surface) encountered with composites made from fiber-reinforced materials may be resolved by applying to an appropriate mold surface a first coating formulation which will create an unreinforced barrier layer upon curing. A second formulation which includes a reinforcing material is then applied on top of the first coating formulation. These formulations are then cured to produce an article which is described as having a "Class A" surface finish. The issue of puncture resistance is not addressed in this disclosure. It is, however, taught in Application US 20020195742 that the disclosed barrier coats may not be suitable for outdoor use. Direct sunlight, heat, acid rain, and other weather-related effects may play a major role in degrading the finish of the surface. The need to use both a topcoat and a barrier layer is disadvantageous from both a cost and a processing perspective.

Published U.S. Patent Application 20040023050 discloses composite articles prepared by a spray operation in which a gel coat is applied to a mold surface, a barrier coat is applied over the gel coat in the mold and a laminate formula containing from 20 to 60% by weight reinforcing fibers is applied over the barrier coat. The gel coat contains a curable polyester polyurethane acrylate resin which is exposed to ultraviolet radiation for a prolonged period of time to produce a high gloss surface. The need to expose the gel coat to ultraviolet radiation and the need to use both a gel coat (for surface quality) and a barrier coat (to prevent shrinkage) are among the disadvantages of the process for producing composite articles disclosed in this patent application.

Published U.S. Patent Application 20040038059 discloses multilayer composites which can be made using an open tool molding process. A key feature of these disclosed composites is the barrier coat which is composed of a cured polyester resin containing reinforcing fibers shorter than those in the laminate layer. Among the disadvantages of these disclosed composites is the need to use two different reinforcing fibers.

However, these known composites have not been considered commercially desirable for applications such as entry doors for houses because they were not sufficiently puncture resistant. Many of these composites also lack the surface quality necessary for many applications.

### SUMMARY OF THE INVENTION

It is an object of the present invention to provide composite articles having a smooth surface which are sufficiently puncture resistant to be useful for construction applications such as entry doors and to a process for the production of such articles.

It is also an object of the present invention to provide an open pour process for making composite articles.

It is a further object of the present invention to provide a process for making relatively large composite articles having good surface quality and excellent mechanical properties, particularly, puncture resistance.

These and other objects which will be apparent to those skilled in the art are accomplished by: (1) applying to a mold surface, preferably by spraying, a polyurethane/polyurea-forming system composed of materials specified herein in amount such that a barrier coat which is at least 5 mils thick will form within a short amount of time, preferably within 30 seconds; (2) applying to the exposed surface of the barrier coat a second fiber-containing polyurethane/polyurea-forming system composed of materials specified herein; and (3) allowing the polyurethane/polyurea-forming systems to cure. The ratio of the weight of the barrier coat to the weight of the fiber-reinforced layer will generally be from about 0.05 to about 0.4.

### DETAILED DESCRIPTION OF THE INVENTION

The present invention is directed to a process for producing composite articles which are characterized by excellent puncture resistance and a smooth surface and to the composite articles produced by this process.

The composite articles of the present invention are made up of at least two layers. The first required layer or barrier coat is a polyurethane/polyurea composition which does not include any reinforcing materials such as glass fibers or fillers. The second required layer is a polyurethane/polyurea composition which is different from that of the barrier coat and must include a reinforcing fibrous material. The ratio of the weight of the barrier coat to the weight of the fiber-reinforced layer will generally be from 0.05 to 0.4, preferably, from 0.1 to 0.4, most preferably, from 0.15 to 0.25.

The first layer or barrier coat is a polyurethane composition which is the reaction product of (1) a polyisocyanate component that must include an isocyanate-terminated prepolymer having an NCO content of from 10 to 32% by weight, preferably, from 16 to 32% by weight, most preferably from 18 to 31 % by weight and (2) an isocyanate-reactive component which must include at least one amine-initiated polyether polyol having a functionality greater than 2, preferably, from 3 to 6, most preferably, from 3 to 4 and an OH number of from 60 to 700, preferably, from 130 to 700, most preferably, from 140 to 650. This barrier coat is applied to a surface such as a mold surface, in an amount such that the cured barrier coat will have a thickness of at least 5 mils, preferably, from 8 to 20 mils, most preferably, from 8 to 12 mils. The barrier coat polyurethane/polyurea-forming system must be capable of curing within a short amount of time, preferably, in less than 30 seconds, more preferably less than 10 seconds so that it will be substantially cured before application of the second, reinforced polyurethane/polyurea composition.

The isocyanate-terminated prepolymer required for the barrier coat composition may be produced from any of the known polyisocyanates having at least two isocyanate groups. Such isocyanates include aromatic, aliphatic, and cycloaliphatic polyisocyanates and combinations thereof. Useful isocyanates include: diisocyanates such as m-phenylene diisocyanate, p-phenylene diisocyanate, 2,4-toluene diisocyanate, 2,6-toluene diisocyanate, 1,6-hexamethylene diisocyanate, 1,4-hexamethylene diisocyanate, 1,3-cyclohexane diisocyanate, 1,4-cyclohexane diisocyanate, hexahydrotoluene diisocyanate and its isomers, isophorone diisocyanate, dicyclohexylmethane diisocyanates, 1,5-naphthalene diisocyanate, 1-methylphenyl-2,4-phenyl diisocyanate, 4,4'-diphenylmethane diisocyanate, 2,4'-diphenylmethane diisocyanate, 4,4'-biphenylene diisocyanate, 3,3'-dimethoxy-4,4'-biphenylene diisocyanate and 3,3'-dimethyl-4,4'-biphenylene diisocyanate; triisocyanates such as 2,4,6-toluene triisocyanate; and polyisocyanates such as 4,4'-dimethyldiphenylmethane-2,2',5,5'-tetraisocyanate and the polymethylene polyphenylpolyisocyanates.

Undistilled or crude polyisocyanate may also be used. The crude toluene diisocyanate obtained by phosgenating a mixture of toluene diamines and the diphenylmethane diisocyanate obtained by phosgenating crude diphenylmethanediamine (polymeric MDI) are examples of suitable crude polyisocyanates. Suitable undistilled or crude polyisocyanates are disclosed in U.S. Patent 3,215,652.

It is preferred, however, that the polyisocyanate be an aromatic polyisocyanate which is commercially available such as any of those polyisocyanates available from Bayer MateriaiScience under the names Mondur M, Mondur ML, Mondur MR, Mondur MRS, Mondur MA2903, Mondur PF, Mondur MRS2 and combinations thereof.

The most preferred polyisocyanates for the production of the prepolymer used to produce the barrier coat of the present invention are prepolymers of diphenylmethane diisocyanate and methylene-bridged polyphenyl polyisocyanates.

Prepolymers based on polyether polyols or polyester polyols and diphenylmethane diisocyanate are particularly preferred. Processes for the production of prepolymers from the above-described diisocyanates and polyisocyanates are known in the art.

The polyisocyanate component which includes the required prepolymer is then reacted with an isocyanate-reactive component that includes at least one amine-initiated polyether polyol having a functionality greater than 2 and a number average molecular weight of from 150 to 700. The amine initiator used to produce this polyether polyol may be selected from any of the amines known to be useful for this purpose, preferably, from toluene diamine, ethanol amine, ethylene diamine, and triethylene amine. This amine initiator is alkoxylated, generally with ethylene oxide and/or propylene oxide, although any of the known alkoxylating materials may be used, in accordance with techniques known to those skilled in the art.

In addition to the amine-initiated polyether polyol, the isocyanate-reactive component may also include any compound containing hydroxyl, amino, and/or thiol groups having a functionality of at least 2 and an OH Number of from 260 to 1100. Examples of suitable isocyanate-reactive materials include: polyether polyamines, polyether polyols initiated with a material other than an amine, polyester polyols, polyether-ester polyols, polymer polyols, polythioether polyols, polyesteramides, hydroxyl group-containing polyacetals, and hydroxyl-group-containing polycarbonates, and combinations thereof. Polyether polyols prepared from hydroxyl-group containing initiators are particularly preferred.

The isocyanate-reactive component used to produce the barrier coat may also contain any of the known chain extenders, crosslinking agents, catalysts, release agents, pigments, surface-active compounds and/or stabilizers and any other auxiliary agents or processing aids commonly used in such systems with the exception of fibers and fillers.

Examples of suitable chain extenders include: 1,4-butane diol, propylene glycol, ethylene glycol, dipropylene glycol, 1,6-hexanediol, and hydroquinone dihydroxy ethyl ether, preferably, ethylene glycol. Suitable crosslinking agents include glycerin and diethyltoluenediamine. Suitable catalysts include: dibutyltindilaurate, tin octoate, tetramethylbutanediamine, and 1,4-diaza-(2,2,2)-bicyclooctane. Suitable release agents include fatty acid esters and silicones. Examples of suitable pigments include: carbon black, titanium dioxide and organic pigments. Examples of suitable surface-active compounds and/or stabilizers include hindered amines and vitamin E.

In a particularly preferred embodiment of the present invention, the isocyanate-reactive component used to produce the barrier coat includes: (1) from 8 to 18 wt% (based on total weight of isocyanate-reactive component) of an amine-initiated polyether polyol having a functionality of approximately 4 and a hydroxyl number of from 500-700; (2) from 12-32 wt% (based on total weight of isocyanate-reactive component) of an amine-initiated polyether polyol having a functionality of approximately 3 and a hydroxyl number of from 100 to 200; (3) from 34 to 54 wt% (based on total weight of isocyanate-reactive component) of a polymer polyol; (4) from 13-23 wt% (based on total weight of isocyanate-reactive component) of a chain extender; and optionally, (5) a catalyst.

The barrier composition is formed by reacting the isocyanate-terminated prepolymer with the isocyanate-reactive component in which the amine-initiated polyether polyol is present at an NCO/OH equivalent ratio of from 0.8 to 1.4, preferably, from 0.9 to 1.2, most preferably, from 1.0 to 1.1.

The barrier coat of the present invention will usually have a hardness value of from 60 Shore A to 95 Shore D, preferably, from Shore D to 60 Shore D.

This barrier coat-forming reaction mixture is applied to a surface in an amount sufficient to form a barrier coat having a thickness of at least 5 mils, preferably, from 8 to 12 mils when fully reacted and cured. Application of the barrier coat may be carried out by any of the known methods which will produce a substantially defect-free surface. Examples of suitable methods include pouring and spraying. Spraying is the preferred method.

The second, fiber-reinforced polyurethane/polyurea required layer of the composites of the present invention is produced from: (1) a polyisocyanate component which includes at least one polyisocyanate having an NCO content of from 6 to 49%, preferably, from 20 to 50, more preferably from 23 to 34, most preferably from 28 to 32; (2) an isocyanate-reactive component which includes: (i) at least one polyether polyol initiated with a hydroxyl-group containing starter and having a functionality of 2 or greater, preferably, from about 2 to about 6, more preferably, from 2 to 4, most preferably, from 2 to 3 and a hydroxyl number of from 28 to 1100, preferably from 400 to 1100, most preferably, from 260 to 1050, and/or (ii) at least one amine-initiated polyether polyol having a functionality greater than 2, preferably, from 2 to 8, more preferably, from 3 to 6, most preferably, from 3 to 4, and a hydroxyl number of from 50 to 1100, preferably, from 300 to 900, most preferably, from 400 to 700; and (3) a filler, preferably, a long glass fiber.

Any of the known polyisocyanates or modified polyisocyanates having the required NCO content may be used in the polyisocyanate component used to produce the fiber reinforced layer of the composites of the present invention. Suitable isocyanates include the known organic isocyanates, modified isocyanates or isocyanate-terminated prepolymers made from any of the known organic isocyanates. Such isocyanates include aromatic, aliphatic, and cycloaliphatic polyisocyanates and combinations thereof. Useful isocyanates include: diisocyanates such as m-phenylene diisocyanate, p-phenylene diisocyanate, 2,4-toluene diisocyanate, 2,6-toluene diisocyanate, 1,6-hexamethylene diisocyanate, 1,4-hexamethylene diisocyanate, 1,3-cyclohexane diisocyanate, 1,4-cyclohexane diisocyanate, hexahydrotoluene diisocyanate and its isomers, isophorone diisocyanate, dicyclohexylmethane diisocyanates, 1,5-naphthalene diisocyanate, 1-methylphenyl-2,4-phenyl diisocyanate, 4,4'-diphenylmethane diisocyanate, 2,4'-diphenylmethane diisocyanate, 4,4'-biphenylene diisocyanate, 3,3'-dimethoxy-4,4'-biphenylene diisocyanate and 3,3'-dimethyl-4,4'-biphenylene diisocyanate; triisocyanates such as 2,4,6-toluene triisocyanate; and polyisocyanates such as 4,4'-dimethyl-diphenylmethane-2,2',5,5'-tetraisocyanate and the polymethylene polyphenylpolyisocyanates.

Undistilled or crude polyisocyanate may also be used. The crude toluene diisocyanate obtained by phosgenating a mixture of toluene diamines and the diphenylmethane diisocyanate obtained by phosgenating crude diphenylmethanediamine (polymeric MDI) are examples of suitable crude polyisocyanates. Suitable undistilled or crude polyisocyanates are disclosed in U.S. Patent 3,215,652.

Modified isocyanates are obtained by chemical reaction of diisocyanates and/or polyisocyanates. Modified isocyanates useful in the practice of the present invention include isocyanates containing ester groups, urea groups, biuret groups, allophanate groups, carbodiimide groups, isocyanurate groups, uretdione groups and/or urethane groups. Preferred examples of modified isocyanates include prepolymers containing NCO groups and having an NCO content of from 6 to 49% by weight, preferably from 23 to 32%, most preferably, from 18 to 30% by weight. Prepolymers based on polyether polyols or polyester polyols and diphenylmethane diisocyanate are particularly preferred. Processes for the production of these prepolymers are known in the art.

The most preferred polyisocyanates for the production of rigid polyurethanes are methylene-bridged polyphenyl polyisocyanates and prepolymers of methylene-bridged polyphenyl polyisocyanates having an average functionality of from 2 to 3.5 (preferably from 2.2 to 2.9) isocyanate moieties per molecule and an NCO content of from 23 to 32% by weight (preferably from 28 to 32%).

The isocyanate-reactive component used to produce the fiber reinforced polyurethane/polyurea layer must include: (i) at least one alkylene oxide polyether polyol prepared from an initiator which is not an amine (e.g., any of the known hydroxyl group-containing starters) having a hydroxyl functionality greater than 2, preferably from 2 to 6, most preferably, from 3 to 4 and a hydroxyl number of at least 28, preferably, from 28 to 1100, most preferably, from 260 to 1050 and/or (ii) at least one amine-initiated polyether polyol having a functionality greater than 2, preferably, from 2 to 6, most preferably, from 2 to 4, and a hydroxyl number greater than 50, preferably, from 50 to 1100, most preferably, from 400 to 700. The amine initiator used to produce such polyether polyether polyols may be any of the known aliphatic or aromatic amines having an amino functionality of at least 2. Preferred amine initiators include: toluene diamine, ethanol amine, ethylene diamine and triethylene amine. Such alkylene oxide-based polyether polyols and amine-initiated polyether polyols are commercially available and methods for producing them are known to those skilled in the art.

Examples of suitable alkylene oxide-based polyether polyols which are commercially available include those which are available from Bayer MaterialScience under the names Multranol 9158, Multranol 9139, Arcol PPG425, Arcol LG650 and Multranol 9171.

Examples of suitable amine-initiated polyether polyols which are commercially available include those which are available from Bayer MaterialScience under the names Multranol 4050, Multranol 9138, Multranol 9170, and Multranol 9181.

In addition to the required polyol(s), any of the other known polyols may also be included. Suitable organic materials containing two or more hydroxyl groups and having molecular weights of from about 400 to about 6000 include polyols such as polyester polyols, polyether polyols, polyhydroxy polycarbonates, polyhydroxy polyacetals, polyhydroxy polyacrylates, polyhydroxy polyester amides and polyhydroxy polythioethers. Polyester polyols, polyether polyols and polyhydroxy polycarbonates are preferred.

Suitable polyester polyols include the reaction products of polyhydric alcohols (preferably dihydric alcohols to which trihydric alcohols may be added) and polybasic (preferably dibasic) carboxylic acids. In addition to these polycarboxylic acids, corresponding carboxylic acid anhydrides or polycarboxylic acid esters of lower alcohols or mixtures thereof may also be used to prepare the polyester polyols useful in the practice of the present invention. The polycarboxylic acids may be aliphatic, cycloaliphatic, aromatic and/or heterocyclic and they may be substituted, e.g. by halogen atoms, and/or unsaturated. Examples of suitable polycarboxylic acids include: succinic acid; adipic acid; suberic acid; azelaic acid; sebacic acid; phthalic acid; isophthalic acid; trimellitic acid; phthalic acid anhydride; tetrahydrophthalic acid anhydride; hexahydrophthalic acid anhydride; tetrachlorophthalic acid anhydride, endomethylene tetrahydrophthalic acid anhydride; glutaric acid anhydride; maleic acid; maleic acid anhydride; fumaric acid; dimeric and trimeric fatty acids such as oleic acid, which may be mixed with monomeric fatty acids; dimethyl terephthalates and bis-glycol terephthalate. Suitable polyhydric alcohols include: ethylene glycol; 1,2- and 1,3-propylene glycol; 1,3- and 1,4-butylene glycol; 1,6-hexanediol; 1,8- octanediol; neopentyl glycol; cyclohexanedimethanol; (1,4-bis(hydroxymethyl)cyclohexane); 2-methyl-1,3-propanediol; 2,2,4-trimethyl -1,3-pentanediol; triethylene glycol; tetraethylene glycol; polyethylene glycol; dipropylene glycol; polypropylene glycol; dibutylene glycol and polybutylene glycol, glycerine and trimethylolpropane. The polyesters may also contain a portion of carboxyl end groups. Polyesters of lactones, e.g. -caprolactone or hydroxyl carboxylic acids such as ω-hydroxycaproic acid, may also be used.

Suitable polycarbonates containing hydroxyl groups include those obtained by reacting diols with phosgene, a diarlycarbonate (e.g., diphenyl carbonate) or cyclic carbonates (e.g., ethylene or propylene carbonate). Examples of suitable diols include: 1,3-propanediol; 1,4-butanediol; 1,6-hexanediol; diethylene glycol; triethylene glycol; and tetraethylene glycol. Polyester carbonates obtained by reacting polyesters or polylactones (such as those described above) with phosgene, diaryl carbonates or cyclic carbonates may also be used in the practice of the present invention.

Polyether polyols which are suitable include those obtained in known manner by reacting one or more starting compounds which contain reactive hydrogen atoms with alkylene oxides such as ethylene oxide, propylene oxide, butylene oxide, styrene oxide, tetrahydrofuran, epichlorohydrin or mixtures of these alkylene oxides. Polyethers which do not contain more than 10% by weight of ethylene oxide units are preferred. Polyethers obtained without the addition of ethylene oxide are most preferred. Suitable starting compounds containing reactive hydrogen atoms include polyhydric alcohols (described above as being suitable for preparing polyester polyols); water; methanol; ethanol; 1,2,6-hexane triol; 1,2,4-butane triol; trimethylol ethane; pentaerythritol; mannitol; sorbitol; methyl glycoside; sucrose; phenol; isononyl phenol; resorcinol; hydroquinone; and 1,1,1- or 1,1,2-tris-(hydroxyl phenyl )-ethane.

Polyethers modified by vinyl polymers are also suitable for the present invention. Such modified polyethers may be obtained, for example, by polymerizing styrene and acrylonitrile in the presence of a polyether (U.S. Patent Nos. 3,383,351; 3,304,273; 3,523,095; 3,110,695 and German Patent No. 1,152,536).

The polythioethers useful in the present invention include the condensation products obtained from thiodiglycol on its own and/or with other glycols, dicarboxylic acids, formaldehyde, aminocarboxylic acids or amino alcohols. These condensation products may be polythio-mixed ethers, polythioether esters or polythioether ester amides, depending on the co-components.

Amine-terminated polyether useful in the present invention may be prepared by reacting a primary amine with a polyether containing terminal leaving groups such as halides, or mesylates as disclosed in commonly assigned U.S. Patent Application Serial Number 07/957,929, filed on October 7, 1992, or as disclosed in U.S. Patents 3,666,726, 3,691,112 and 5,066,824.

Suitable polyacetals include those prepared from aldehydes (e.g., formaldehyde) and glycols such as diethylene glycol, triethylene glycol, ethoxylated 4,4'-dihydroxydiphenyldimethylmethane, and 1,6-hexanediol. Polyacetals prepared by the polymerization of cyclic acetals may also be used in the practice of the present invention.

Polyhydroxy polyester amides and polyamines useful in the present invention include the predominantly linear condensates obtained from polybasic saturated and unsaturated carboxylic acids or their anhydrides and polyvalent saturated or unsaturated aminoalcohols, diamines, polyamines and mixtures thereof.

Suitable monomers for producing hydroxy-functional polyacrylates include acrylic acid, methacrylic acid, crotonic acid, maleic anhydride, 2-hydroxyethyl acrylate, 2-hydroxyethyl methacrylate, 2-hydroxypropyl acrylate, 2-hydroxypropyl methacrylate, 3-hydroxypropyl acrylate, 3-hydroxypropyl methacrylate, glycidyl acrylate, glycidyl methacrylate, 2-isocyanatoethyl acrylate and 2-isocyanatoethyl methacrylate.

The low molecular weight, isocyanate-reactive compounds useful in the present invention have from about 2 to about 6 hydroxyl groups, preferably two hydroxyl groups, and have an average molecular weight of from 60 to 200, preferably from 80 to 150 and may be used in combination with or instead of the high molecular weight material containing two or more hydroxyl groups. Useful low molecular weight isocyanate-reactive materials include the polyhydric alcohols which have previously been described in the process for the preparation of the polyester polyols and polyether polyols. Dihydric alcohols are preferred.

In addition to the above-mentioned isocyanate-reactive compounds, monofunctional and even small amounts of trifunctional and higher functional compounds generally known in polyurethane chemistry may be used. For example, trimethylolpropane may be used in special cases in which slight branching is desired.

Catalysts may be used to aid the polyurethane/polyurea-forming reaction. Examples of catalysts useful for promoting such reactions include di-n-butyl tin dichloride, di-n-butyl tin diacetate, di-n-butyl tin dilaurate, triethylenediamine, bismuth nitrate, tin octoate and tetramethyl butanediamine.

In addition to the isocyanate-reactive materials, a reinforcing material is also included in the isocyanate-reactive component. This reinforcing material is preferably in the form of fibers. Suitable fibers have an average length of from 10 to 100 mm, preferably, from 12.5 to 25 mm. Suitable fibrous materials include: glass fibers; carbon fibers; ceramic fibers; natural fibers such as flax, jute, and sisal; synthetic fibers such as polyamide fibers, polyester fibers and polyurethane fibers. The fibrous material is generally included in an amount of from 10 to 60 wt%, based on total weight of isocyanate-reactive component, preferably, from 20 to 50 wt.%, most preferably, from 25 to 40 wt.%.

The composite articles of the present invention may have a solid or a foamed fiber-reinforced layer. A foamed layer may be obtained by including a blowing agent in the reaction mixture from which the fiber-reinforced layer is produced.

In a particularly preferred embodiment of the present invention, the isocyanate component of the second, reinforced layer may be any commercially available polymeric MDI having the required NCO content, such as those available from Bayer MaterialScience under the names Mondur MRS, Mondur MR or Mondur MRS4. The isocyanate-reactive component includes: (1) a polyether polyol which is the propoxylation product of glycerin having a functionality of approximately 3 and an OH Number of from 28 to 1100; and (2) an amine-initiated polyether polyol in which the amine initiator is an aromatic amine having a functionality of from 3 to 4 and an OH Number of from 50 to 1100. From 25 to 40 wt%, based on total weight of reaction mixture, of glass fibers having an average length of from 12.5 to 25 mm may be included in the isocyanate-reactive component or may be added to the total reaction mixture either as the isocyanate and isocyanate reactive components are combined or after they have been combined. It is most preferred that the fiber be combined with the reaction mixture as the isocyanate and isocyanate-reactive components are combined.

The second, reinforced layer of the composites of the present invention are generally produced with a reaction mixture in which the NCO to OH equivalent ratio is from 0.95 to 1.3, preferably, from 1.0 to 1.1.

While the composites of the present invention may be produced in accordance with any of the known techniques, they are generally produced by an open-pour molding technique in which the barrier coat is applied by spraying and the reaction mixture that will form the second, reinforced layer is poured onto the barrier coat, preferably, after that barrier coat is substantially fully reacted.

The barrier coat must be such that upon curing the barrier coat and the fiber-reinforced layer bond together in a manner and to an extent such that the barrier coat and the fiber reinforced layer form an acceptable bond between the layers that will resist delamination or other degradation during use within the intended service environment. Before spraying or otherwise applying the barrier coat-forming reaction mixture to a surface such as a mold surface, the mold may be heated, preferably to a temperature of between approximately 37 degrees Celsius and approximately 94 degrees Celsius. However, such heating is not required. Processing temperatures of reactants, reaction mixtures and mold are chosen in accordance with techniques known to those skilled in the art to provide the desired speed of composite processing.

After application of the barrier coat to the surface, the fiber-containing reaction mixture is poured or otherwise placed on top of the barrier coat. Long fiber injection is a particularly preferred method. Apparatus and processing parameters for such long fiber injection are disclosed, e.g., in U.S. Published Patent Application 2004/0135280. The layered contents of the mold may be cured. The composites of the present invention may be fabricated using an open or closed mold.

The composite articles produced in accordance with the present invention are generally produced in a mold. Suitable molds may be made of steel, aluminum, or nickel. Molds having shear edges are particularly preferred because of their improved seal and simplification of the product trimming process.

In producing composites in accordance with a particularly preferred embodiment of the present invention, the barrier coat-forming reaction mixture will generally be sprayed to a mold surface at a rate of from 40 to 70 grams of reaction mixture per second. To be able to apply the reaction mixture at this rate and to achieve the desired barrier coat thickness of at least 0.013 cm (5 mils), it will generally be necessary to heat both the isocyanate component and the isocyanate-reactive component (also referred to in this discussion as the "polyol component") to a temperature of from 48.9 (120) to 71.1°C (160°F). Typical spraying pressures for proper mixing and application will generally range from 136.1 atm. (2,000) to 170.1 atm (2,500 psi). The specific conditions to be used will, however, be dependent upon the particular equipment spray equipment being used. Suitable spray equipment is commercially available from GRACO, Glas-Craft, GUSMER-DECKER, Isotherm and BINKS.

The temperature of the mold surface onto which the barrier coat-forming mixture is sprayed is not critical for proper application and cure of the barrier coat. The mold temperature is important for the proper curing of the reinforcing layer which is applied to the barrier coat.

A mold release will generally be used to assure acceptable demolding of the composite article.

While the fiber-containing reaction mixture which will form the reinforcing layer of the composites of the present invention may be applied to the barrier coat by a variety of methods, long fiber injection ("LFI") is a particularly advantageous method.

In the LFI process, an open mold is charged from a mixhead in which fiberglass strands cut from the roving and the polyurethane reaction mixture are combined. The volume and length of the glass fibers can be adjusted at the mixhead. This process uses lower cost fiberglass roving rather than mats or preforms. The glass roving is preferably fed to a mixhead equipped with a glass chopper. The mixhead simultaneously dispenses the polyurethane reaction mixture and chops the glass roving as the mixhead is positioned over the mold and the contents of the mixhead are dispensed into the open mold. When the contents of the mixhead have been dispensed into the mold, the mold is closed, the reaction mixture is allowed to cure and the composite article is removed from the mold. The mold is generally maintained at a temperature of from 48.9 °C (120) to 87.8 °C (190°F). The time needed to dispense the contents of the mixhead into the mold will usually be between 10 and 60 seconds. The mold will generally remain closed for a period of from 1.5 to 6 minutes to allow the glass fiber reinforced layer to cure.

The advantages of the process of the present invention, particularly when conducted using a fully automated system include: the ability to use lower cost fiberglass rovings instead of mats; the ability to vary the amount of glass reinforcement in a part; the ability to use either foamed or solid polyurethane as the reinforcing layer; and the ability to produce composite articles with a polyurethane in-mold coating and thereby eliminate secondary painting operations.

Having thus described our invention, the following Examples are given as being illustrative thereof. All parts and percentages given in these Examples are parts by weight or percentages by weight, unless otherwise indicated.

### EXAMPLES

Materials useful in the production of the barrier coat and fiber reinforced components in accordance with the present invention include:
- POLY A:: a polymer polyol having an OH Number of approximately 27 mg KOH/g which is commercially available from Bayer MaterialScience LLC under the designation Arcol 24-38.
- POLY B:: An amine-based tetrafunctional polyether polyol having an OH Number of approximately 630 mg KOH/g which is commercially available from Bayer MaterialScience LLC under the name Multranol 4050.
- POLY C:: An amine-based trifunctional polyether polyol having an OH Number of approximately 150 mg KOH/g which is commercially available from Bayer MaterialScience LLC under the name Multranol 9144.
- POLY D:: A polyoxypropylene triol modified with ethylene oxide having an OH Number of approximately 36 mg KOH/g which is commercially available from Bayer MaterialScience under the name Multranol 3900.
- POLY E:: A trifunctional, amine-initiated polyether polyol having an OH Number of approximately 350 mg KOH/g which is available from Bayer MaterialScience under the name Multranol 9170.
- POLY F:: A polypropylene oxide-based diol modified with ethylene oxide having an OH Number of approximately 28 mg KOH/g which is available from Bayer MaterialScience under the name Multranol 9111.
- POLY G:: An amine-initiated polyether tetrol having an OH Number of approximately 460 mg KOH/g which is commercially available from Bayer MaterialScience LLC under the name Multranol 4063.
- POLY H:: An amine-initiated polyether triol having an OH Number of approximately 700 mg KOH/g which is commercially available from Bayer MaterialScience LLC under the name Multranol 9138.
- POLY I:: A polypropylene oxide-based triol modified with ethylene having an OH Number of approximately 470 mg KOH/g which is commercially available from Bayer MaterialScience under the name Multranol 9158.
- POLY J:: A polypropylene oxide-based triol modified with ethylene oxide having an OH Number of approximately 380 mg KOH/g which is commercially available from Bayer MaterialScience under the name Multranol 4035.
- POLY K:: A polypropylene oxide-based hexol, having an OH Number of approximately 340 mg KOH/g which is commercially available from Bayer MaterialScience under the name Multranol 9171.
- POLY L:: A polypropylene oxide-based diol having an OH Number of approximately 264 mg KOH/g which is commercially available from Bayer MaterialScience under the name ARCOL PPG425.
- POLY M:: A polypropylene oxide-based triol having an OH Number of approximately 655 mg KOH/g which is commercially available from Bayer MaterialScience under the name ARCOL PPG LG-650.
- POLY N:: A polypropylene oxide-based triol having an OH Number of approximately 1050 mg KOH/g which is commercially available from Bayer MaterialScience under the name Multranol 9133.
- POLY O:: An amine-initiated polyether tetrol having an OH Number of approximately 395 mg KOH/g which is commercially available from Bayer MaterialScience under the name Multranol 8114.
- POLY P:: An amine-initiated polyether tetrol having an OH Number of approximately 360 mg KOH/g which is commercially available from Bayer MaterialScience under the name Multranol 8120.
- POLY Q:: A polypropylene oxide-based triol having an OH Number of approximately 875 mg KOH/g which is commercially available from Bayer MaterialScience under the name Multranol 8108.
- BDO:: 1,4-butanediol.
- EG:: Ethylene glycol.
- DEG:: Diethylene glycol.
- DTDA:: Diethyltoluenediamine.
- PU-1748:: A quaternary ammonium salt of the amide of tall oil and N,N'-dimethyl-1,3-diamine propane;
- MRA:: Mold release agent which is commercially available from Henkel under the name Loxiol G-71 S.
- CAT A:: A triethylene diamine catalyst which is commercially available from Air Products under the name Dabco 33LV.
- CAT B:: A tertiary amine catalyst which is commercially available from Air Products under the name Dabco 1028.
- CAT C:: A tin catalyst which is commercially available from Air Products under the name Dabco T12.
- CAT D:: An amine blow catalyst which is commercially available from Air Products under the name of Dabco BL17.
- CAT E:: An amine catalyst which is commercially available from Air Products under the name Dabco EG.
- Stab:: A sterically hindered amine light stabilizer which is commercially available from Ciba under the name Tinuvin 765.
- UVA:: A benzotriazole UV absorber which is commercially available from Ciba under the name Tinuvin 213.
- AO 1:: A hindered phenol antioxidant which is commercially available from Ciba under the name Irganox 1135.
- FILLER:: Continuous glass roving of 2400-available from Owens Corning under the name ME1020, and from Saint Gobain under the name Vetrotex 5249.
- NCO A:: An aromatic polymeric isocyanate based on diphenylmethane diisocyanate having an NCO content of 31 % by weight and a viscosity at 25°C of 160 MPa which is commercially available from Bayer MaterialScience LLC under the name Mondur 645A.
- NCO B:: A modified polymeric diphenylmethane diisocyanate ("PMDI") isocyanate-terminated prepolymer having an NCO content of 19% and a viscosity at 25°C of 500 MPa-s which is commercially available from Bayer MaterialScience under the name Baytec MP-190.
- NCO C:: A modified diphenylmethane diisocyanate (MDI) isocyanate-terminated prepolymer modified with polypropylene ether glycol having an NCO content of 21 % which is commercially available from Bayer MaterialScience under the name Baytec MP-210.
- NCO D:: An aromatic isocyanate-terminated polymeric isocyanate based on diphenylmethane diisocyanate having an NCO content of 32% and a viscosity at 25°C of 40 MPa-s which is commercially available from Bayer MaterialScience under the name Bayfit 753X-A.
- NCO E:: An aromatic isocyanate-terminated prepolymer based on diphenylmethane diisocyanate having an NCO content of 23% and a viscosity at 25°C of 750 MPa-s which is commercially available under the name Mondur PF.
- NCO F:: A modified isocyanate-terminated aromatic isocyanate based on diphenylmethane diisocyanate having an NCO content of 23 and a viscosity at 25°C of 550 MPa-s which is commercially available from Bayer MaterialScience under the name Mondur MA 2300.

Formulations which are useful for the production of composite articles by the above-described procedure are given in the following Table.

**TABLE**

| Ex. | 1 | 2 | 3 | 4 | 6 | 7 | 8 | 9 | 10 | 11 | 12 | 13 | 14 | 15 |
|---|---|---|---|---|---|---|---|---|---|---|---|---|---|---|
| Bar Coat¹ | | | | | | | | | | | | | | |
| POLY A, pbw | - | 40.7 | 52.5 | - | 47.5 | - | - | - | 7 | 52.5 | 44 | - | 7 | - |
| POLY B, pbw | - | 10 | 10 | - | 10 | - | - | - | - | 10 | 13.5 | - | - | - |
| POLY C, pbw | 85 | 10 | 20 | 60 | 25 | 90 | 85 | 55 | 75 | 20 | 22 | 60 | 75 | 55 |
| POLY D, pbw | - | - | - | - | - | - | - | - | - | - | - | - | - | - |
| POLY E, pbw | - | - | - | 30 | - | - | - | 30 | 10 | - | - | 30 | 10 | 30 |
| POLY F, pbw | - | 17.7 | - | - | - | - | - | - | - | - | - | - | - | - |
| DTDA, pbw | 13 | 19 | 15 | 9.8 | 15 | 7.8 | 13 | 9.8 | 7 | 15 | 17.6 | 9.8 | 7 | 9.8 |
| BDO, pbw | - | - | - | - | - | - | - | - | - | - | - | - | - | - |
| Stab, pbw | 1 | 1 | 1 | - | 1 | 1 | 1 | - | 1 | 1 | 1 | - | 1 | - |
| UVA, pbw | 1 | 1 | 1 | - | 1 | 1 | 1 | - | 1 | 1 | 1 | - | 1 | - |
| AO1, pbw | 0.5 | 0.5 | 0.5 | - | 0.5 | 0.5 | 0.5 | - | 0.5 | 0.5 | 0.5 | - | 0.5 | - |
| CAT A, pbw | 0.1 | 0.15 | 0.14 | - | 0.14 | 0.1 | 0.1 | - | - | 0.14 | 0.08 | - | - | - |
| CATB, pbw | - | - | - | - | - | - | - | - | - | - | 0.4 | - | - | - |
| CAT C, pbw | - | - | - | 0.1 | - | - | - | 0.1 | 0.1 | - | - | 0.1 | 0.1 | 0.1 |
| NCO A, pbw | 144 | - | - | 144 | 193 | - | 85.3 | - | - | - | - | - | - | - |
| NCO B, pbw - | | 87 | 85 | - | 87 | 76 | - | - | 87 | 85 | 87 | - | 87 | - |
| NCO C, pbw | 71 | - | - | 100 | - | - | 71 | 90 | - | - | - | 100 | - | 90 |
| NCO Index | 105 | 105 | 105 | 105 | 105 | 105 | 105 | 105 | 105 | 105 | 105 | 105 | 105 | 105 |
| Reinf Layer² | | | | | | | | | | | | | | |
| POLY B, pbw | 60 | 15 | - | 60 | 31 | - | - | - | - | 31 | 31 | - | - | 31 |
| POLY G, pbw | 20 | - | - | 20 | - | - | - | - | - | - | - | 12 | - | - |
| POLY H, pbw | - | - | - | - | - | - | - | - | - | - | 40 | - | - | 35 |
| POLY I, pbw | - | 85 | - | - | - | - | 25 | - | - | - | - | - | 25 | - |
| POLY J, pbw | - | 5 | - | - | - | - | - | 10 | - | - | - | - | - | - |
| POLY K, pbw | - | - | 25 | - | 12 | 10 | - | - | 25 | 12 | - | 10 | - | 12 |
| POLY L, pbw | - | - | 25 | - | - | - | - | - | 25 | - | - | - | - | - |
| POLY M, pbw | - | - | 50 | - | 12 | - | - | 20 | 50 | 12 | - | - | - | 12 |
| POLY N, pbw | - | - | - | - | 17 | 12 | - | - | - | 17 | 17 | - | - | 17 |
| POLY O, pbw | 20 | - | - | 20 | - | - | - | - | - | - | - | - | - | - |
| POLY P, pbw | - | - | - | - | - | 17 | - | - | - | - | - | 17 | - | - |
| POLY Q, pbw | - | - | - | - | - | - | 50 | 35 | - | - | - | - | 50 | - |
| DEG, pbw | - | 1 | - | - | - | - | - | - | - | - | - | - | - | - |
| EG, pbw | - | - | 4 | - | - | 1 | - | 4 | 4 | - | - | 1 | - | - |
| CAT E, pbw | - | - | 2 | - | - | - | 2 | - | 2 | - | - | - | 2 | - |
| CAT C, pbw | - | - | 0.2 | - | - | - | 0.4 | 0.05 | 0.2 | - | - | - | 0.4 | - |
| H₂O, pbw | - | - | - | - | - | - | - | 0.4 | - | - | - | - | - | - |
| NCO A, pbw | 144 | - | - | 144 | 193 | - | 85.3 | - | - | 193 | 171.5 | - | 85.3 | - |
| NCO D, pbw | - | 136 | - | - | - | - | - | - | - | - | - | - | - | 186 |
| NCO E, pbw | - | - | - | - | - | 79.8 | - | 179 | 206 | - | - | 79.8 | - | - |
| NCO F, pbw | - | - | 206 | - | - | - | 85.3 | - | - | - | - | - | 85.3 | - |
| Index | 110 | 110 | 110 | 110 | 104 | 104 | 107 | 101 | 110 | 104 | 110 | 104 | 107 | 108 |
| % Glass | 50 | 35 | 45 | 25 | 50 | 45 | 20 | 30 | 35 | 25 | 30 | 35 | 45 | 30 |
| Thick, mm | | | | | | | | | | | | | | |
| Part A | 1.8 | 1.8 | 1.8 | 1.8 | 1.8 | 1.8 | 1.8 | 1.8 | 1.8 | 1.8 | 1.8 | 1.8 | 1.8 | 1.8 |
| Part B | 2.2 | 2.2 | 2.2 | 2.2 | 2.2 | 2.2 | 2.2 | 2.2 | 2.2 | 2.2 | 2.2 | 2.2 | 2.2 | 2.2 |
| Part C | 3.5 | 3.5 | 3.5 | 3.5 | 3.5 | 3.5 | 3.5 | 3.5 | 3.5 | 3.5 | 3.5 | 3.5 | 3.5 | 3.5 |
| Bar Coat¹ Thick, mm | | | | | | | | | | | | | | |
| Part A | 0.22 | 0.22 | 0.25 | 0.25 | 0.22 | 0.22 | 0.25 | 0.25 | 0.25 | 0.22 | 0.22 | 0.25 | 0.25 | 0.25 |
| Part B | 0.3 | 0.3 | 0.4 | 0.3 | 0.3 | 0.3 | 0.4 | 0.3 | 0.3 | 0.3 | 0.3 | 0.4 | 0.3 | 0.3 |
| Part C | 0.4 | 0.5 | 0.5 | 0.6 | 0.5 | 0.5 | 0.5 | 0.6 | 0.5 | 0.5 | 0.5 | 0.5 | 0.6 | 0.6 |

| | | | | | | | | | | | | | | |
|---|---|---|---|---|---|---|---|---|---|---|---|---|---|---|
| ¹Bar Coat = Barrier Coating ² Reinf Layer = Reinforced Layer | | | | | | | | | | | | | | |

To demonstrate improved impact resistance, parts of varying thicknesses were made with a formulation corresponding to that given above for Example 12 and tested using a DynaTup instrument by the method described below.

Impact Test Method using DynaTup Instrument:

Drop tower testing is performed with a DynaTup instrument to determine the impact resistance of a given material. The impact tup is fitted with a 5.1 cm x 10.2 cm (2"x4") piece of wood having an impact area of 33.9 cm² (5.25 square inches). Two masses, one weighing 3.6 kg (7.9 pounds) and one weighing 13.8 kg (30.5 pounds) may be used. The 3.6 kg (7.9 pound) mass has an impact velocity of 8.35 m/sec. (27.4 ft./second). The 13.8 kg (30.5 pound) mass has an impact velocity of 5.76 m/sec (18.9 ft./second). The impact energies for these masses are 12.72 kg/m (92 ft./pound) for the 3.6 kg (7.9 pound) mass and 23.37 kg/m (169 ft./pound) for the 13.8 kg (30.5 pound) mass. The test specimen has a width of 15.24 cm (6 inches) and a length of 30.48 cm (12 inches). In the conduct of the test, the test specimen is placed on top of a Styrofoam panel having a thickness of 3.8 cm (1.5 inches) and the selected mass is dropped onto the sample. Force deflection plots are provided by the instrument manufacturer.

What constitutes a "Passing" impact energy is dependent upon the thickness of the sample.

When subjected to this test using a 13.8 kg (30.5 pound) mass, an impact energy of greater than 10.37 kgm (75 ft.-lbs.) is needed for a 1.8 mm thick specimen to rate a "Pass". An impact energy of between 15.03 kgm (108.7) and 23.37 kgm (169 ft.-lbs.) is needed for a 2.2 mm thick specimen to rate a "Pass". An impact energy of between 18.98 kgm (137.3) and 23.27 kgm (169 ft.-lbs.) is needed for a 3.5 mm thick specimen to rate a "Pass".

The 1.8 mm,specimens tested had impact energies of > 10.37 kgm (>75 ft-lbs).

The 2.2 mm specimens tested had impact energies of > 15.2 kgm (>110 ft-lbs.)

The 3.5 mm specimens tested had impact energies of >18.7 kgm (>135 ft-lbs.)

## Claims

1. A composite article having a smooth, bubble-free surface which is sufficiently puncture resistant that at a thickness of 1.8 mm it has an impact energy greater than 10.37 kgm (75 ft. pounds) when subjected to a 13.8 kg (30.5 pound) DynaTup impact comprising:
a) a barrier coat having a thickness greater than 0.0127 cm (5 mils) which is the reaction product of
(1) an isocyanate component comprising an isocyanate-terminated prepolymer having an NCO content of from 10 to 32% and
(2) an isocyanate-reactive component comprising at least one amine-initiated polyether polyol having a functionality greater than 2 and an OH number of from 60 to 700
which is bonded to
b) a fiber-reinforced polyurethane/urea which is the reaction product of
(1) an isocyanate component comprising an isocyanate having an NCO content of from 6 to 49% and
(2) an isocyanate-reactive component comprising
(i) at least one alkylene oxide polyether polyol which is initiated with a material that is not an amine having a functionality of at least 2 and an OH Number of at least 28
and/or
(ii) at least one amine-initiated polyether polyol having a functionality greater than 2 and an OH Number greater than 50,
and
(3) 5 - 60% by weight, based on total weight of fiber-reinforced polyurethane/urea b), fibers having an average fiber length of from 10 to 100 mm in amounts such that the ratio by weight of a) to b) is from 0.1 to 0.5.

2. The composite article of Claim 1 in which the isocyanate prepolymer in component (1) of barrier coat a) is a modified diphenylmethane diisocyanate prepolymer.

3. The composite article of Claim 2 in which the prepolymer in component (1) of barrier coat a) has an NCO content of from 18 to 31%.

4. The composite article of Claim 1 in which the amine-initiated polyether polyol of isocyanate-reactive component (2) of barrier coat a) is initiated with an aromatic amine.

5. The composite article of Claim 1 in which the isocyanate in isocyanate component (1) of the fiber-reinforced polyurethane/urea b) has an NCO content of from 23 to 32%.

6. The composite article of Claim 1 in which the isocyanate-reactive component (2) of the fiber reinforced polyurethane/urea b) is polyether polyol (i).

7. The composite article of Claim 6 in which the polyether polyol (i) has a functionality of from 3 to 4 and an OH Number of from 260 to 1050.

8. The composite article of Claim 1 in which the isocyanate-reactive component (2) of the fiber reinforced polyurethane/urea b) is polyether polyol (ii).

9. The composite article of Claim 8 in which the polyether polyol (ii) has a functionality of from 2 to 4 and an OH Number of from 400 to 700.

10. The composite article of Claim 1 in which isocyanate-reactive component (2) of the fiber reinforced polyurethane/urea b) includes both polyether polyol (i) and polyether polyol (ii).

11. The composite article of Claim 1 in which fibers (3) of the fiber reinforced polyurethane/urea are included in an amount of from 25 to 40% by weight.

12. The composite article of Claim 1 in which fibers (3) of the fiber reinforced polyurethane/urea have an average length of from 12.5 to 25 mm.

13. The composite article of Claim 1 in which the ratio by weight of a) to b) is from 0.15 to 0.25.

14. The composite article of Claim 1 in which the isocyanate-reactive component (2) of barrier coat a) is a mixture of a trifunctional amine-initiated polyether polyol and a tetrafunctional amine-initiated polyether polyol.

15. The composite article of Claim 1 in which the isocyanate component (1) of the fiber-reinforced polyurethane/urea includes polymeric MDI.

16. The composite article of Claim 1 in which the isocyanate-reactive component (2) of the fiber-reinforced polyurethane/urea includes an alkylene oxide polyether polyol having an OH Number greater than 1000.

17. The composite article of Claim 1 in which the fibers (3)are selected from the group consisting of glass, carbon, ceramic, Kevlar and natural fibers.

18. The composite article of Claim 1 in the form of a door panel.

19. An open pour process for the production of a composite, molded article having a smooth, bubble-free surface which is sufficiently puncture resistant that at a thickness of 1.8 mm it has an impact energy greater than 10.37 kgm (75 ft.-pounds) when subjected to a 30.5 DynaTup impact comprising:
a) applying to a mold surface a polyurethane/urea-forming mixture which reacts to form a barrier coat which mixture comprises:
(1) an isocyanate component comprising an isocyanate-terminated prepolymer having an NCO content of from 10 to 32%, and
(2) an isocyanate-reactive component comprising at least one amine-initiated polyether polyol having a functionality greater than 2 and an OH Number of from 60 to 700 with the equivalent ratio of (1) to (2) being from 0.8 to 1.4,
in an amount such that the barrier coat formed will have a thickness of at least 0.0127 cm (5 mils),
b) applying to the surface of the barrier coat a polyurethane/urea-forming, fiber containing mixture comprising:
(1) an isocyanate component comprising an isocyanate having an NCO content of from 6 to 49%,
(2) an isocyanate-reactive component comprising:
(i) at least one alkylene oxide polyether polyol initiated with a material that is not an amine having a functionality of at least 2 and an OH Number of at least 28
and/or
(ii) at least one amine-initiated polyether polyol having a functionality greater than 2 and an OH Number greater than 50,
in amounts such that the NCO/OH equivalent ratio is from 0.95 to 1.1 and
(3) 5-60% by weight, based on total weight of polyurethane/urea-forming, fiber-containing mixture, fibers having an average fiber length of from 10 to 100 mm
in amounts such that the ratio by weight of a) to b) is from 0.1 to 0.5,
c) allowing the polyurethane/urea-forming, fiber containing mixture to cure for a period of from 1 to 6 minutes in the mold which is maintained at a temperature of from 25 to 90°C., and
d) removing the composite from the mold.

20. The process of Claim 19 in which the isocyanate-reactive component of the reaction mixture which forms the barrier coat a) comprises:
(A) from 8 to 18% by weight, based on total weight of (2), of an amine-initiated polyether polyol having a functionality of 4 and a hydroxyl number of from 500 to 700 and
(B) from 12 to 32% by weight, based on total weight of (2), of an amine-initiated polyether polyol having a functionality of 3 and a hydroxyl number of from 100-200,
(C) from 34 to 54% by weight, based on total weight of (2), of a polymer polyol,
(D) a chain extender, and
(E) optionally, a catalyst.

21. The process of Claim 19 in which the isocyanate-reactive component of the polyurethane/urea-forming, fiber-containing reaction mixture comprises a propoxylated glycerin.

## Patentansprüche

1. Verbundgegenstand mit einer glatten, blasenfreien Oberfläche, die eine ausreichende Durchstoßfestigkeit aufweist, dass sie in einer Dicke von 1,8 mm eine Auftreffenergie von mehr als 10,37 kg.m (75 ft.lb) aufweist, wenn sie einem DynaTup-Schlag von 13,8 kg (30,5 lb) ausgesetzt wird, wobei der Verbundgegenstand Folgendes umfasst:
a) eine Sperrbeschichtung mit einer Dicke von mehr als 0,0127 cm (5 mil), die das Reaktionsprodukt von
(1) einer Isocyanatkomponente, die ein Präpolymer mit endständigem Isocyanat und einem NCO-Gehalt von 10 bis 32 % umfasst, und
(2) einer mit Isocyanat reagierenden Komponente ist, die zumindest ein amininitiiertes Polyetherpolyol mit einer Funktionalität von mehr als 2 und einer OH-Zahl von 60 bis 700 umfasst,
die mit
b) einem faserverstärkten Polyurethan/Harnstoff verbunden ist, der das Reaktionsprodukt von
(1) einer Isocyanatkomponente, die ein Isocyanat in einem NCO-Gehalt von 6 bis 49 % umfasst;
(2) einer mit Isocyanat reagierenden Komponente, die Folgendes umfasst:
(i) zumindest ein Alkylenoxidpolyetherpolyol, das mit einem Material initiiert wird, das kein Amin ist, mit einer Funktionalität von zumindest 2 und einer OH-Zahl von zumindest 28,
und/oder
(ii) zumindest ein amininitiiertes Polyetherpolyol mit einer Funktionalität von mehr als 2 und einer OH-Zahl über 50,
und
(3) 5 bis 60 Gew.-% Fasern, bezogen auf das Gesamtgewicht des faserverstärkten Polyurethans/Harnstoffs b), ist, die eine mittlere Faserlänge von 10 bis 100 mm aufweisen und in einer solchen Menge vorliegen, dass das Gewichtsverhältnis zwischen a) und b) 0,1 bis 0,5 beträgt.

2. Verbundgegenstand nach Anspruch 1, worin das Isocyanatpräpolymer in Komponente (1) der Sperrbeschichtung a) ein modifiziertes Diphenylmethandiisocyanat-Präpolymer ist.

3. Verbundgegenstand nach Anspruch 2, worin das Präpolymer in Komponente (1) der Sperrbeschichtung a) einen NCO-Gehalt von 18 bis 31 % aufweist.

4. Verbundgegenstand nach Anspruch 1, worin das amininitiierte Polyetherpolyol der mit Isocyanat reagierenden Komponente (2) der Sperrbeschichtung a) mit einem aromatischen Amin initiiert wird.

5. Verbundgegenstand nach Anspruch 1, worin das Isocyanat in der Isocyanatkomponente (1) des faserverstärkten Polyurethans/Harnstoffs b) einen NCO-Gehalt von 23 bis 32 % aufweist.

6. Verbundgegenstand nach Anspruch 1, worin die mit Isocyanat reagierende Komponente (2) des faserverstärkten Polyurethans/Harnstoffs b) ein Polyetherpolyol (i) ist.

7. Verbundgegenstand nach Anspruch 6, worin das Polyetherpolyol (i) eine Funktionalität von 3 bis 4 und eine OH-Zahl von 260 bis 1.050 aufweist.

8. Verbundgegenstand nach Anspruch 1, worin die mit Isocyanat reagierende Komponente (2) des faserverstärkten Polyurethans/Harnstoffs b) ein Polyetherpolyol (ii) ist.

9. Verbundgegenstand nach Anspruch 8, worin das Polyetherpolyol (ii) eine Funktionalität von 2 bis 4 und eine OH-Zahl von 400 bis 700 aufweist.

10. Verbundgegenstand nach Anspruch 1, worin die mit Isocyanat reagierende Komponente (2) des faserverstärkten Polyurethans/Harnstoffs b) sowohl ein Polyetherpolyol (i) als auch ein Polyetherpolyol (ii) umfasst.

11. Verbundgegenstand nach Anspruch 1, worin Fasern (3) des faserverstärkten Polyurethans/Harnstoffs in einer Menge von 25 bis 40 Gew.-% enthalten sind.

12. Verbundgegenstand nach Anspruch 1, worin Fasern (3) des faserverstärkten Polyurethans/Harnstoffs eine mittlere Länge von 12,5 bis 25 mm aufweisen.

13. Verbundgegenstand nach Anspruch 1, worin das Gewichtsverhältnis zwischen a) und b) 0,15 bis 0,25 beträgt.

14. Verbundgegenstand nach Anspruch 1, worin die mit Isocyanat reagierende Komponente (2) der Sperrbeschichtung a) ein Gemisch aus einem trifunktionellen amininitiierten Polyetherpolyol und einem tetrafunktionellen amininitiierten Polyetherpolyol ist.

15. Verbundgegenstand nach Anspruch 1, worin die Isocyanatkomponente (1) des faservestärkten Polyurethans/Harnstoffs polymeres MDI umfasst.

16. Verbundgegenstand nach Anspruch 1, worin die mit Isocyanat reagierende Komponente (2) des faserverstärkten Polyurethans/Harnstoffs ein Alkylenoxidpolyetherpolyol mit einer OH-Zahl von mehr als 1.000 umfasst.

17. Verbundgegenstand nach Anspruch 1, worin die Fasern (3) aus der aus Glas-, Kohlenstoff-, Keramik-, Kevlar- und Naturfasern bestehenden Gruppe ausgewählt sind.

18. Verbundgegenstand nach Anspruch 1 in Form einer Türverkleidung.

19. Offenes Gießverfahren zur Herstellung eines Formteils aus Verbundmaterial mit einer glatten, blasenfreien Oberfläche, die eine ausreichende Durchstoßfestigkeit aufweist, dass sie in einer Dicke von 1,8 mm eine Auftreffenergie von mehr als 10,37 kg.m (75 ft.lb) aufweist, wenn sie einem DynaTup-Schlag von 13,8 kg (30,5 lb) ausgesetzt wird, wobei das Verfahren Folgendes umfasst:
a) Aufbringen eines Polyurethan/Harnstoff-Formgemischs, das unter Ausbildung einer Sperrbeschichtung reagiert, auf eine Formoberfläche, wobei das Gemisch Folgendes umfasst:
(1) eine Isocyanatkomponente, die ein Präpolymer mit endständigem Isocyanat und einem NCO-Gehalt von 10 bis 32 % umfasst, und
(2) eine mit Isocyanat reagierende Komponente, die zumindest ein amininitiiertes Polyetherpolyol mit einer Funktionalität von mehr als 2 und einer OH-Zahl von 60 bis 700 umfasst,
wobei das Äquivalentverhältnis zwischen (1) und (2) 0,8 bis 1,4 beträgt, in einer solchen Menge, dass die ausgebildete Sperrbeschichtung eine Dicke von zumindest 0,0127 cm (5 mil) aufweist,
(b) Aufbringen eines Polyurethan/Harnstoff bildenden, faserhältigen Gemischs auf die Oberfläche der Sperrbeschichtung, wobei das Gemisch Folgendes umfasst:
(1) eine Isocyanatkomponente, umfassend ein Isocyanat mit einem NCO-Gehalt von 6 bis 49 %,
(2) eine mit Isocyanat reagierende Komponente, umfassend:
(i) zumindest ein Alkylenoxidpolyetherpolyol, das mit einem Material initiiert wird, das kein Amin ist, mit einer Funktionalität von zumindest 2 und einer OH-Zahl von zumindest 28,
und/oder
(ii) zumindest ein amininitiiertes Polyetherpolyol mit einer Funktionalität von mehr als 2 und einer OH-Zahl von mehr als 50,
in einer solchen Menge, dass das NCO/OH-Äquivalentverhältnis 0,95 bis 1,1 beträgt,
und
(3) 5 bis 60 Gew.-% Fasern, bezogen auf das Gesamtgewicht des Polyurethan/Harnstoff bildenden, faserhältigen Gemischs, die eine mittlere Faserlänge von 10 bis 100 mm aufweisen und jeweils in einer solchen Menge, dass das Gewichtsverhältnis zwischen a) und b) 0,1 bis 0,5 beträgt,
(c) Härtenlassen des Polyurethan/Harnstoff bildenden, faserhältigen Gemischs über einen Zeitraum von 1 bis 6 min in der Form, die bei einer Temperatur von 25 bis 90 °C gehalten wird, und
(d) Entfernen des Verbundmaterials aus der Form.

20. Verfahren nach Anspruch 19, worin die mit Isocyanat reagierende Komponente des Reaktionsgemischs, das die Sperrbeschichtung a) bildet, Folgendes umfasst:
(A) 8 bis 18 Gew.-%, bezogen auf das Gesamtgewicht von (2), eines amininitiierten Polyetherpolyols mit einer Funktionalität von 4 und einer OH-Zahl von 500 bis 700 und
(B) 12 bis 32 Gew.-%, bezogen auf das Gesamtgewicht von (2), eines amininitiierten Polyetherpolyols mit einer Funktionalität von 3 und einer OH-Zahl von 100 bis 200,
(C) 34 bis 54 Gew.-%, bezogen auf das Gesamtgewicht von (2), eines polymeren Polyols,
(D) einen Kettenverlängerer und
(E) gegebenenfalls einen Katalysator.

21. Verfahren nach Anspruch 19, worin die mit Isocyanat reagierende Komponente des Polyurethan/Harnstoff bildenden, faserhältigen Gemischs ein propoxyliertes Glycerin umfasst.

## Revendications

1. Article composite présentant une surface lisse exempte de bulles qui est suffisamment résistant à la perforation pour que sur une épaisseur de 1,8 mm il présente une énergie de choc supérieure à 10,37 kgm (75 pieds.livres) lorsqu'il est soumis à un choc Dyna Tup de 13,8 kg (30,5 livres) comprenant :
a) un revêtement barrière ayant une épaisseur supérieure à 0,0127 cm (5 millièmes de pouce) qui est le produit de réaction de
1) un constituant isocyanate comprenant un prépolymère isocyanate-terminé ayant une teneur NCO de 10 à 32 % et
2) un constituant isocyanate-réactif comprenant au moins un polyétherpolyol amine-initié ayant une fonctionnalité supérieure à 2 et un indice OH de 60 à 700
qui est liée à
b) un polyuréthane/urée renforcé de fibres qui est le produit de réaction de
1) un constituant isocyanate comprenant un isocyanate ayant une teneur NCO de 6 à 49 % et
2) un constituant isocyanate-réactif comprenant :
(i) au moins un polyétherpolyol d'oxyde d'alkylène qui est initié avec un matériau qui n'est pas une amine présentant une fonctionnalité d'au moins 2 et un indice OH d'au moins 28
et/ou
(ii) au moins un polyétherpolyol amine-initié ayant une fonctionnalité supérieure à 2 et un indice OH supérieur à 50,
et
3) 5-60 % en poids, rapporté au poids total du polyuéthane/ urée renforcé de fibres b), de fibres ayant une longueur moyenne de fibres de 10 à 100 mm dans des quantités telles que le rapport en poids de a) à b) est de 0,1 à 0,5.

2. Article composite selon la revendication 1, dans lequel le prépolymère d'isocyanate dans le constituant (1) du revêtement barrière a) est un prépolymère de diisocyanate de diphénylméthane modifié.

3. Article composite selon la revendication 2, dans lequel le prépolymère dans le constituant (1) du revêtement barrière a) présente une teneur NCO de 18 à 31 %.

4. Article composite selon la revendication 1, dans lequel le polyétherpolyol amine-initié du constituant isocyanate-réactif (2) du revêtement barrière a) est initié avec une amine aromatique.

5. Article composite selon la revendication 1, dans lequel l'isocyanate dans le constituant isocyanate (1) du polyuréthane/urée renforcé de fibres b) présente une teneur NCO de 23 à 32 %.

6. Article composite selon la revendication 1, dans lequel le constituant isocyanate-réactif (2) du polyuréthane/urée renforcé de fibres b) est un polyétherpolyol (i).

7. Article composite selon la revendication 6, dans lequel le polyétherpolyol (i) présente une fonctionnalité de 3 à 4 et un indice OH de 260 à 1 050.

8. Article composite selon la revendication 1, dans lequel le constituant isocyanate-réactif (2) du polyuréthane/urée renforcé de fibres b) est un polyétherpolyol (ii).

9. Article composite selon la revendication 8, dans lequel le polyétherpolyol (ii) présente une fonctionnalité de 2 à 4 et un indice OH de 400 à 700.

10. Article composite selon la revendication 1, dans lequel le constituant isocyanate-réactif (2) du polyuréthane/urée renforcé de fibres b) comprend à la fois un polyétherpolyol (i) et un polyétherpolyol (ii).

11. Article composite selon la revendication 1, dans lequel des fibres (3) du polyuréthane/urée renforcé de fibres sont incluses dans une quantité de 25 à 40 % en poids.

12. Article composite selon la revendication 1, dans lequel des fibres (3) du polyuréthane/urée renforcé de fibres présentent une longueur moyenne de 12,5 à 25 mm.

13. Article composite selon la revendication 1, dans lequel le rapport en poids de a) à b) est de 0,15 à 0,25.

14. Article composite selon la revendication 1, dans lequel le constituant isocyanate-réactif (2) du revêtement barrière a) est un mélange d'un polyétherpolyol amine trifonctionnelle-initié et d'un polyétherpolyol amine tétrafonctionnelle-initié.

15. Article composite selon la revendication 1, dans lequel le constituant isocyanate (1) du polyuréthane/urée renforcé de fibres comprend du MDI polymère.

16. Article composite selon la revendication 1, dans lequel le constituant isocyanate-réactif (2) du polyuréthane/urée renforcé de fibres comprend un polyétherpolyol d'oxyde d'alkylène ayant un indice OH supérieur à 1 000.

17. Article composite selon la revendication 1, dans lequel les fibres (3) sont choisies parmi des fibres de verre, de carbone, de céramique, de Kevlar et des fibres naturelles.

18. Article composite selon la revendication 1, dans la forme d'un panneau de porte.

19. Procédé de coulée ouverte pour la production d'un article moulé composite présentant une surface lisse exempte de bulles qui est suffisamment résistante à la perforation pour que sur une épaisseur de 1,8 mm il présente une énergie de choc supérieure à 10,37 kg/m (75 pieds.livres) lorsqu'il est soumis à un choc Dyna Tup 30,5 comprenant :
a) l'application sur une surface de moule d'un mélange formant un polyuréthane/urée qui réagit pour former un revêtement barrière, lequel mélange comprend :
1) un constituant isocyanate comprenant un prépolymère isocyanate-terminé ayant une teneur NCO de 10 à 32 %, et
2) un constituant isocyanate-réactif comprenant au moins un polyétherpolyol amine-initié ayant une fonctionnalité supérieure à 2 et un indice OH de 60 à 700
avec le rapport d'équivalent de (1) à (2) étant de 0,8 à 1,4,
dans une quantité telle que le revêtement barrière formé présentera une épaisseur d'au moins 0,0127 cm (5 millièmes de pouce),
b) l'application sur la surface du revêtement barrière d'un mélange contenant des fibres, formant un polyuréthane/urée comprenant :
1) un constituant isocyanate comprenant un isocyanate ayant une teneur NCO de 6 à 49 % et
2) un constituant isocyanate-réactif comprenant :
(i) au moins un polyétherpolyol d'oxyde d'alkylène initié avec un matériau qui n'est pas une amine présentant une fonctionnalité d'au moins 2 et un indice OH d'au moins 28
et/ou
(ii) au moins un polyétherpolyol amine-initié ayant une fonctionnalité supérieure à 2 et un indice OH supérieur à 50,
dans des quantités telles que le rapport d'équivalent NCO/OH est de 0,95 à 1,1, et
3) 5-60 % en poids, rapporté au poids total du mélange contenant des fibres, formant un polyuréthane/urée, de fibres ayant une longueur moyenne de fibres de 10 à 100 mm,
dans des quantités telles que le rapport en poids de a) à b) est de 0,1 à 0,5,
c) le laisser durcir du mélange contenant des fibres, formant un polyuréthane/urée sur une durée de 1 à 6 minutes dans le moule qui est maintenu à une température de 25 à 90°C, et
d) le démoulage du composite à partir du moule.

20. Procédé selon la revendication 19, dans lequel le constituant isocyanate-réactif du mélange réactionnel qui forme le revêtement barrière a) comprend :
A) de 8 à 18 % en poids, rapporté au poids total de (2), d'un polyétherpolyol amine-initié ayant une fonctionnalité de 4 et un indice hydroxyle de 500 à 700 et
B) de 12 à 32 % en poids, rapporté au poids total de (2), d'un polyétherpolyol amine-initié ayant une fonctionnalité de 3 et un indice hydroxyle de 100-200,
C) de 34 à 54 % en poids, rapporté au poids total de (2), d'un polyol polymère,
D) un agent d'allongement de chaîne, et
E) éventuellement un catalyseur.

21. Procédé selon la revendication 19, dans lequel le constituant isocyanate-réactif du mélange réactionnel contenant des fibres, formant un polyuréthane/urée comprend une glycérine propoxylée.
